# EUROPÄISCHE PATENTSCHRIFT

(11) **EP 2 464 854 B1**
(45) Veröffentlichungstag und Bekanntmachung des Hinweises auf die Patenterteilung: **03.04.2013**
(21) Anmeldenummer: 10728175.0
(22) Anmeldetag: 22.06.2010
(51) Int. Cl.: F02M 61/16, F16L 37/12

(54) **STECKVERBINDUNG**
PLUG CONNECTION
RACCORD À EMBOÎTEMENT

(30) Priorität: 12.08.2009 DE 102009028473
(43) Veröffentlichungstag der Anmeldung: 20.06.2012
(73) Patentinhaber: Robert Bosch GmbH, 70442 Stuttgart (DE)
(72) Erfinder: KNIS, Wolfram, 73529 Schwaebisch Gmuend (DE); EHRHARDT, Uwe, 73760 Ostfildern (DE); ALBRECHT, Hans, 71334 Waiblingen (DE); MIEHLE, Tilman, 71334 Waiblingen (DE)
(86) Internationale Anmeldenummer: PCT/EP2010/058772
(87) Internationale Veröffentlichungsnummer: WO 2011/018262

(56) Entgegenhaltungen:
- DE-A1-102006 061 952

## Beschreibung

### Stand der Technik

DE 199 15 695 A1 bezieht sich auf ein Einlasselement aus Kunststoff und ein Verfahren zu dessen Herstellung. Ein Drosselkörper enthält einen inneren Hauptabschnitt aus Kunststoff, ferner einen Nebenabschnitt aus Kunststoff, der zusammenhängend mit einem Außenumfang des Hauptabschnittes gebildet ist, sowie ein Vereisungsverhinderungsrohr, welches in den Nebenabschnitt eingebettet ist. Der zylindrisch konfigurierte Hauptabschnitt mit im Wesentlichen gleichmäßiger Wanddicke wird in einem ersten Formschritt gebildet, wodurch Schrumpf- und Verwerfungserscheinungen unterdrückt werden. Dadurch wird die erforderliche Rundheit oder Kreisförmigkeit einer Innenumfangsfläche des Hauptabschnittes gewährleistet. Der Nebenabschnitt wird in einem anschließenden, zweiten Formschritt gebildet, so dass eine Außenseite des Hauptabschnittes abgedeckt wird, um dadurch einen Drosselkörper mit einer gewünschten Geometrie herzustellen. Die Temperatur eines Abschnittes des Formwerkzeuges, der zu der Innenumfangsfläche des Hauptabschnittes weist, ist niedriger eingestellt als die Temperatur des anderen Abschnittes der Formwerkzeuges, wodurch die Innenumfangsfläche des Hauptabschnittes, bei der es auf Dimensionsgenauigkeit ankommt, früher gekühlt werden kann als der andere Abschnitt, um Schrumpfungserscheinungen zu unterbinden. Werden zum Formen des Hauptabschnittes und des Nebenabschnittes unterschiedliche Typen von Kunststoffmaterial eingesetzt, wird der Freiheitsgrad hinsichtlich der Materialauswahl erhöht.

DE 39 07 764 A1 hat einen Kraftstoffverteiler für Kraftstoffeinspritzanlagen von Verbrennungskraftmaschinen zum Gegenstand. Dieser Kraftstoffverteiler für Kraftstoffeinspritzanlagen mit mindestens einem Kraftstoffeinspritzventil mit einem Ventilträger weist eine Aufnahmebohrung für das Kraftstoffeinspritzventil und einen die Aufnahmebohrung umgebenden Stirnflansch auf. An diesem stützt sich das Kraftstoffeinspritzventil mittels eines Kragens ab. Zur Lagefixierung des Kraftstoffeinspritzventils sind unabhängig von einer noch aufzusetzenden Steckerhaube der Stirnflansch des Ventilträgers und der Kragen des Kraftstoffeinspritzventils als miteinander korrespondierende Teile eines Bajonettverschlusses ausgebildet. Die Steckerhaube wird als zusätzliches Verriegelungsmittel verwendet und greift hierzu mit Sperrzapfen formschlüssig in die der Ver- bzw. Entriegelung dienenden Aussparungen im Bajonettverschluss ein.

DE 102 40 130 A1 bezieht sich auf eine Steckverbindung für medienführende Leitungen. Es wird ein Verfahren offenbart, mit welchem sich eine Steckverbindung herstellen lässt, wobei diese mindestens eine Anschlussstelle aufweist. Ein hülsenförmiger Körper wird aus einem ersten Material spritzgegossen. Der erhaltene hülsenförmige Körper wird in eine weitere Kavität eingebracht. In der weiteren Kavität wird ein Steckerkörper aus einem zweiten Material spritzgegossen. Der in die weitere Kavität eingebrachte hülsenförmige Körper bildet in Bereichen das Formwerkzeug für den Steckerkörper.

DE 10 2006 061 952 A1 offenbart eine Steckverbindung für medienführende Leitungen. Der Steckverbinder dient insbesondere zur Befestigung in einer Öffnung eines Injektorkörpers eines Kraftstoffinjektors mit einem Steckerkörper. An diesem ist mindestens ein Rastelement ausgebildet. Der Steckerkörper umfasst einen Anschlussstutzen, wobei das mindestens eine Rastelement in einer Verriegelungsposition eines am Steckerkörper verschieblich aufgenommenen Sicherungsbügels in der Öffnung des Injektorkörpers gesichert ist.

### Offenbarung der Erfindung

Erfindungsgemäß wird vorgeschlagen, bei einer Steckverbindung die Montagemöglichkeit eines Steckerkörpers in einer Öffnung zu verbessern. Mit der erfindungsgemäß vorgeschlagenen Lösung werden beispielsweise beim Anschluss eines niederdruckseitigen Rücklaufes eines Kraftstoffinjektors mittels der Steckverbindung die Montageschritte des Aufstecken des Steckerkörpers auf den Kraftstoffinjektor und das nachfolgende Verriegeln des Steckerkörpers in der Öffnung zu kombinieren und so einen Fehlmontage auszuschließen. Dies wird dadurch erreicht, dass bei der erfindungsgemäß vorgeschlagenen Steckerverbindung eine Zwangsführung erfolgt und so ein korrektes Aufstecken des Steckerkörpers auf einen Anschlussstutzen im Niederdruckbereich eines Kraftstoffinjektors sichergestellt wird. Ein möglicher Kraftstoffaustritt durch nicht korrekte Montage kann durch die erfindungsgemäß vorgeschlagene Steckverbindung sicher vermieden werden.

In vorteilhafter Weise bietet die erfindungsgemäß vorgeschlagene Lösung eine Verkürzung der Montage bzw. Taktzeiten bei der Montage des Kraftstoffeinspritzsystems an Verbrennungskraftmaschinen. Die getrennten Montageschritte, d.h. das Aufstecken und das nachfolgende Verriegeln des Steckerkörpers an einem Anschlussstutzen eines Kraftstoffinjektors werden durch die Zwangsführung zu einer Bewegung zusammengeführt. Die Krafteinleitung zur Ermöglichung der Montage erfolgt lediglich an einer Stelle und die beiden Montageschritte werden automatisch sequenziell nacheinander ausgeführt.

Die erfindungsgemäß vorgeschlagene Lösung ermöglicht eine weitere Reduzierung des Bauraumbedarfes, so dass die Freiheiten hinsichtlich der Montage der erfindungsgemäß vorgeschlagenen Steckverbindungen einer Verbrennungskraftmaschine verbessert werden. Des Weiteren kann durch die erfindungsgemäß vorgeschlagene Lösung eine Vereinfachung der Leitungsführung bzw. eine Verbesserung des Anschlusses umgebender Motorbauteile bzw. von Bauteilen des Kraftstoffeinspritzsystems erreicht werden.

Durch eine insbesondere vorteilhafte zentrische Krafteinleitung werden Montageflächen überflüssig und können ganz entfallen. Aufgrund einer Verringerung des Materialeinsatzes kann eine Einsparung von Material und eine damit einhergehende Kostenreduktion sichergestellt werden.

Die erfindungsgemäß vorgeschlagene Lösung eignet sich darüber hinaus zu einer automatisierten Abfrage eines korrekt angeschlossenen Rücklaufsteckers über einen zentral am Steckerkörper vorzusehenden Pin, der durch die Stirnfläche des Sicherungsbügels, der relativ zum Steckerkörper der Steckverbindung beweglich ist, taucht. Bei korrekt montiertem Rücklaufsteckerkörper liegt die Stirnfläche des Sicherungsbügels in einer Ebene mit Stegen, die seitlich an den Steckerkörper angespritzt sind, so dass eine korrekte Montage des Steckerkörpers sowie die korrekte Position des Sicherungsbügels in seiner verrasteten Stelle automatisch oder auch mechanisch detektiert werden können.

Weitere vorteilhafte Ausbildungen der erfindungsgemäß vorgeschlagenen Lösung sind den Unteransprüchen zu entnehmen.

### Kurze Beschreibung der Zeichnungen

Anhand der Zeichnung wird die Erfindung nachstehend eingehender beschrieben. Es zeigt:
- Figur 1: die erfindungsgemäß vorgeschlagene Steckverbindung in geöffneter Position vor Montage am niederdruckseitigen Rücklauf eines Kraftstoffinjektors,
- Figur 1 A: eine vergrößerte Wiedergabe des Kontaktbereiches zwischen Tasthaken eines Sicherungsbügels und Rippen eines Steckerkörpers der Steckverbindung,
- Figur 2: den Sicherungsbügel am Steckerkörper in geöffneter Position,
- Figur 2A: eine in vergrößertem Maßstab wiedergegebene Darstellung der gespreizten Rasthaken,
- Figur 2B: eine Detaildarstellung konturierter Kontaktflächen von Rasthaken und Rippen des Steckerkörpers,
- Figur 3: den Steckerkörper in in die Öffnung einer Buchse eingeführten noch nicht verrasteten Zustand,
- Figur 4: eine Darstellung der Rippen des Steckerkörpers beaufschlagt durch die Montagekraft vor Einrasten von Rippenköpfen in eine Ausnehmung der Buchse,
- Figur 5: die Rippenköpfe der Rippen eingerastet in eine in Umfangsrichtung sich erstreckende Ausnehmung der Buchse,
- Figur 6: einen weiter in einen Injektorablaufstutzen eingeschobenen Steckerkörper eines Rücklaufsteckers,
- Figur 6A: eine Detaildarstellung der einander kontaktierenden konturierten Stirnseiten von Rippen des Steckerkörpers und Rasthaken des Sicherungsbügels,
- Figur 7: das in radialer Richtung nach innen erfolgende Abgleiten der konturierten Stirnflächen der Rasthaken von den Rippenköpfen der Rippen des Steckerkörpers,
- Figur 8: der in den Injektorstutzen eingeschobenen Sicherungsbügel in Montageposition,
- Figur 9: die Darstellung des montierten Zustandes der erfindungsgemäß vorgeschlagenen Steckverbindung in einem im Niederdruckbereich liegenden Ablaufstutzen eines Kraftstoffinjektors und
- Figur 10: eine perspektivische Darstellung des Sicherungsbügels.

### Ausführungsvarianten

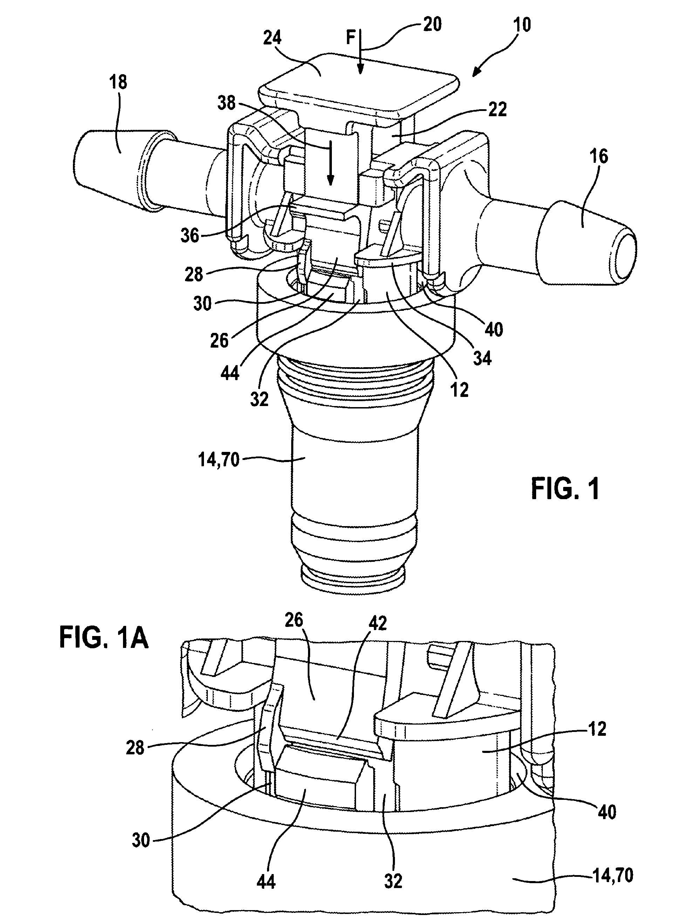

Figur 1 zeigt die erfindungsgemäß vorgeschlagene Steckverbindung mit einem Steckerkörper in geöffneter Position vor der Montage in einem niederdruckseitigen Injektorstutzen eines Kraftstoffinjektors.

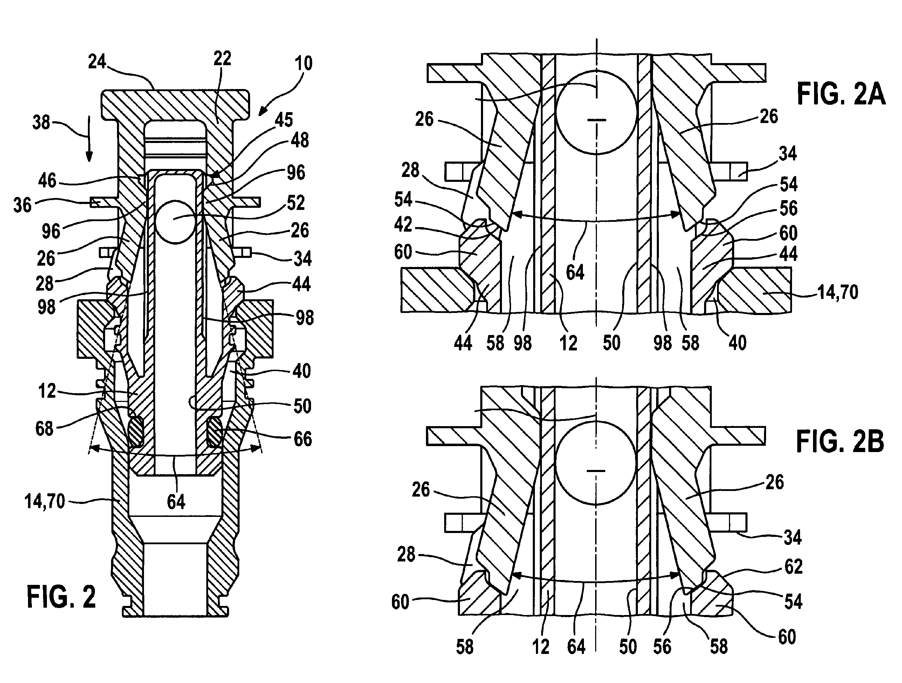

Aus der Darstellung gemäß Figur 1 geht hervor, dass ein Steckverbinder 10 einen Steckerkörper 12 sowie einen Injektorkörper 14 oder eine Buchse 70 umfasst. Am Steckerkörper 12 befindet sich in einer 180°- oder 120°-Teilung angeordnet ein erster Anschluss 16 und ein zweiter Anschluss 18, die miteinander einen Horizontalkanal 52 bilden, vgl. Darstellung gemäß Figuren 2, 6, 7, 8 und 9.

Am Steckerkörper 12 ist ein im Wesentlichen in vertikale Richtung bewegbarer Sicherungsbügel 22 aufgenommen. Der Sicherungsbügel 22, bevorzugt gefertigt als Spritzgussbauteil ebenso wie der Steckerkörper 12, umfasst eine Stirnfläche 24. An der Stirnfläche 24 greift eine durch Bezugszeichen 20 angedeutete Montagekraft F an, mit welcher der Sicherungsbügel 22 in Montagerichtung 38 bewegbar ist.

Der Sicherungsbügel 22 ist relativ beweglich zum Steckerkörper 12 angeordnet. Der Sicherungsbügel 22 umfasst z.B. zwei einander gegenüberliegende Rasthaken 26. Die Rasthaken 26 verlaufen am Sicherungsbügel 22, vgl. Darstellung gemäß der Figuren 2A und 2B, in einer Spreizung 64.

An einem der Rasthaken 26 befindet sich eine zungenförmig ausgebildete Positionierhilfe 28, die bei der Herstellung des Sicherungsbügels 22 im Kunststoffspritzgussverfahren unmittelbar gefertigt werden kann. Die Positionierhilfe 28 ist so ausgebildet, dass diese in einen ersten Schlitz 30 am Umfang des Steckerkörpers 12 im Bereich einer Rippe 44 einfährt. Neben dem ersten Schlitz 30, der sich im Wesentlichen in vertikaler Richtung am Steckerkörper 12 erstreckt, ist am Steckerkörper 12 ein weiterer, breiter ausgebildeter, zweiter Schlitz 32 vorgesehen, der jedoch nicht von einer Positionierhilfe 28 durchsetzt ist. Der zweite Schlitz 32 befindet sich zwischen der Mantelfläche des Steckerkörpers 12 und der anderen Seitenfläche der Rippe 44

Am Sicherungsbügel 22 mit den beiden einander gegenüberliegenden Rasthaken 26 befinden sich darüber hinaus Auflageflächen 36, mit welchen der Sicherungsbügel 22 zur Verriegelung des Steckerkörpers 12 an einer Stirnseite einer Stutzenöffnung 40 des Injektorstutzens 14 bzw. der Buchse 70 aufliegt.

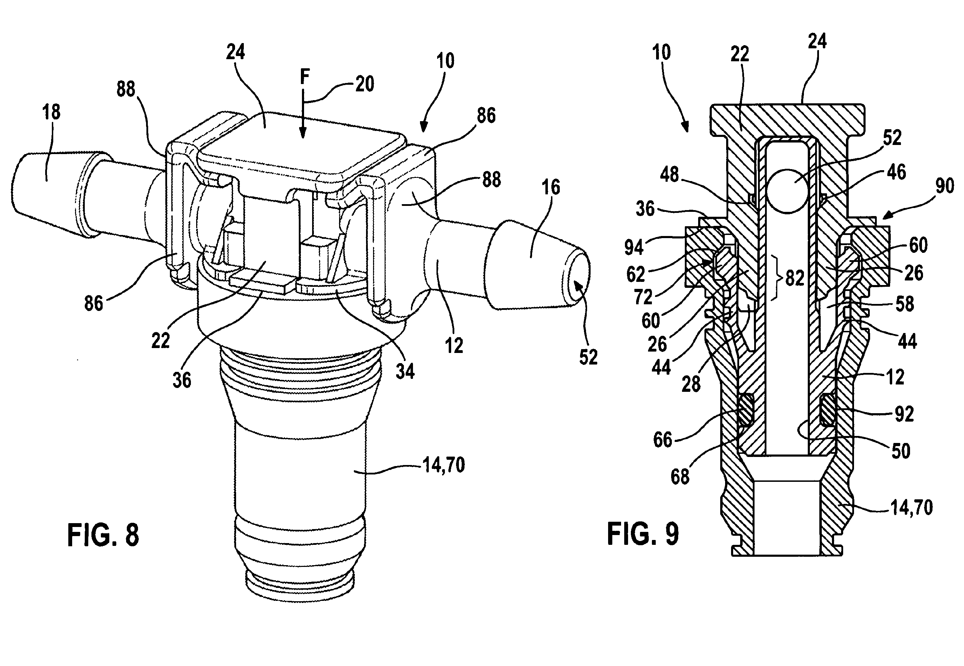

Der Steckerkörper 12 des erfindungsgemäß vorgeschlagenen Steckverbinders 10 weist darüber hinaus Auflageflächen 34 auf, mit denen der Steckerkörper 12 im in die Öffnung 40 eingeschobenen Zustand auf der Stirnseite des Injektorstutzens 14, die die Öffnung 40 begrenzt, bzw. der Stirnseite der Buchse 70 aufliegt (vgl. Figuren 8 und 9).

Aus der perspektivischen Wiedergabe gemäß Figur 1 geht zudem hervor, dass am Steckerkörper 12 in vertikale Richtung zu den Rasthaken 26 des Sicherungsbügels 22 entgegengesetzt verlaufende Rippen 44 ausgebildet sind. Die Montagerichtung 38, in welcher die erfindungsgemäß vorgeschlagene Steckverbindung 10 in der Öffnung 40 montiert wird, ist durch Bezugszeichen 38 angedeutet.

Figur 1A zeigt eine Darstellung des Kontaktbereiches der Rasthaken 26 des Sicherungsbügels 22 mit den Rippen 44. Diese sind an die Mantelfläche des Steckerkörpers 12 des erfindungsgemäß vorgeschlagenen Steckverbinders 10 angespritzt.

Figur 1A zeigt, dass die an einer Kontaktfläche 42 an der Stirnseite des Rasthakens 26 angespritzte Positionierhilfe 28 im Wesentlichen zungenförmig ausgebildet ist. Die zungenförmig ausgebildete Positionierhilfe 28, und die ein Verdrehen des Sicherungsbügels 22 verhindert, ragt in den ersten Schlitz 30 zwischen dem Mantel des Steckerkörpers 12 und einer seitlichen Begrenzungsfläche der Rippe 44 hinein. In dem Montagezustand gemäß Figur 1A befindet sich der Sicherungsbügel 22, an dem die Rasthaken 26 ausgebildet sind, in seiner geöffneten, d.h. noch nicht verrasteten Position, was in der Darstellung gemäß Figur 1A auch daraus hervorgeht, dass sich die Kontaktfläche 42 in einem wenn auch geringen Abstand zur Oberkante der Rippe 44 befindet.

Figur 2 zeigt eine Darstellung des erfindungsgemäß vorgeschlagenen Steckverbinders, mit in geöffneter Position verbliebenem Sicherungsbügel.

Figur 2 zeigt, dass in der geöffneten Position des Sicherungsbügels 22 dieser mit einer Nut 48 in einer korrespondierenden Feder 46 des Steckerkörpers 12 des Steckverbinders 10 verrastet ist. Die Nut 48 und die Feder 46 bilden eine Rückhalteeinrichtung 45 für den Sicherungsbügel 22. Die Rasthaken 26 des Sicherungsbügels 22 verlaufen in einer Spreizung, vgl. Bezugszeichen 64 in den Figuren 2A bzw. 2B. Aus der Darstellung gemäß Figur 2 geht hervor, dass der Steckerkörper 12 des erfindungsgemäß vorgeschlagenen Steckverbinders 10 in die Öffnung 40 des Injektorstutzens 14 bzw. der Buchse 70 eingeführt ist. An der Mantelfläche des zylindrisch ausgebildeten Steckerkörpers 12 befinden sich die sich gegenläufig zu den Rasthaken 26 des Sicherungsbügels 22 erstreckenden Rippen 44. Der Steckerkörper 12 wird bevorzugt im Wege des Kunststoffspritzgussverfahrens gefertigt und weist neben den Anschlüssen 16 bzw. 18 und dem durch diese gebildeten Horizontalkanal 52 einen sich in vertikaler Richtung erstreckenden Vertikalkanal 50 auf. Darüber hinaus befindet sich an dem der Öffnung 40 zuweisenden Ende des Steckerkörpers 12 eine Ausnehmung 68, gefertigt als Umlaufnut, in die eine Dichtung 66, insbesondere ausgebildet als O-Ring, eingelassen ist.

Aus der Darstellung gemäß Figur 2 geht hervor, dass aufgrund der Wirkung der Rückhalteeinrichtung 45 die Rasthaken 26 des Sicherungsbügels 22 gerade so weit an die Oberseite der Rippen 44 des Steckerkörpers 12 herangeführt sind, dass sich die Stirnseiten der Rasthaken 26 und die Stirnseiten der Rippen 44 gerade noch nicht berühren. An der Innenseite des Sicherungsbügels 22 ausgeführte Führungsschienen 96 gleiten in zu deren Profil korrespondierend ausgebildeten Ausnehmungen 98 am Steckerkörper 12, um ein Verkippen des Sicherungsbügels 22 bei der Montage zu verhindern. Bezugszeichen 36 bezeichnet die Anschlagfläche am Sicherungsbügel 22. Bezugszeichen 34 bezeichnet eine Auflagefläche am Steckerkörper 12, mit der dieser im montierten Zustand auf der Stirnseite des Injektorstutzens 14 bzw. der Buchse 70 aufliegt. Der Steckerkörper 12 wird in Montagerichtung 38 in die Öffnung 40 eingeführt. Der Sicherungsbügel 22 wird zur Verrastung des Steckerkörpers 12 in der Öffnung 40 in vertikaler Richtung verschoben. Figur 2 zeigt ferner, dass sich die Federn 46 der Rückhalteeinrichtung 45 am Steckerkörper 12 in der Offenstellung des Sicherungsbügels 22 am unteren Ende von Nuten 48 im Sicherungsbügel 22 befinden.

Figur 2A zeigt in vergrößertem Maßstab eine Darstellung der einander gegenüberliegenden Stirnflächen sowohl der Rasthaken des Sicherungsbügels wie auch der Stirnseite der Rippen des Steckerkörpers.

Figur 2A ist zu entnehmen, dass die Rasthaken 26 des hier nicht vollständig dargestellten Sicherungsbügels 22 in Bezug zueinander in einer Spreizung 64 angeordnet sind. Die Spreizung kann im Bereich zwischen 0° und 30° liegen, je nach Dimensionierung. Aus der in vergrößertem Maßstab wiedergegebenen Darstellung der Figur 2A geht hervor, dass die Rasthaken 26 an ihrem einem Rippenkopf 60 der Rippen 44 zugewandten Ende eine konturierte Stirnseite 54 aufweisen. Komplementär zur Konturierung der konturierten Stirnseite 54 der Rasthaken 26 sind die Stirnseiten der Rippenköpfe 60 der Rippen 44 ebenfalls mit einer Konturierung 56 versehen. Aus der Darstellung gemäß Figur 2A geht hervor, dass hinter dem linken Rasthaken 26 liegend die zungenförmig ausgebildete Positionierhilfe 28 angedeutet ist. In Figur 2A bezeichnet das Bezugszeichen 58 sich in vertikale Richtung erstreckende Ausnehmungen oder Schlitzungen, um welche die federnd ausgebildeten Rippen 44 in Bezug zur Mantelfläche des Steckerkörpers 12 bewegbar sind. Durch die konturierten Stirnseiten 54 bzw. 56 der Rasthaken 26 und der Rippenköpfe 60 der Rippen 44 wird bei Kontakt der Stirnseiten 54, 56 miteinander eine Reduktion der Spreizung 64 der Rasthaken 26 des Sicherungsbügels 22 erreicht. Die Rasthaken 26 werden in Richtung auf die Achse 74 gebogen. Der Sicherungsbügel 22 wird mit in Figur 2 dargestellten Führungsschienen 96 in entsprechend zu deren Profil geformten Gegenstücken 98 auf dem Steckerkörper 12 entlanggeschoben, um ein Verkippen des Sicherungsbügels 22 bei dessen Montage bzw. bei der Ausführung des Schließvorgangs zu verhindern.

Figur 2B zeigt die einander kontaktierenden, konturierten Stirnseiten 54 bzw. 56 der Rasthaken 26 des Sicherungsbügels 22 bzw. der Rippenköpfe 60 der Rippen 44. Die konturierten Stirnseiten 54 bzw. 56 sind mit einer sich in radiale Richtung nach innen erstreckenden Anschrägungen 62 ausgebildet, so dass das Einführen der Rasthaken 26 in die sich im Wesentlichen in vertikale Richtung erstreckenden Ausnehmungen 58 bzw. Schlitze 58 des Steckerkörpers 12 vereinfacht und sich zwangsläufig mit der Aufbringung der Montagekraft 20 auf die Stirnseite 24 des Sicherungsbügels 22 (vgl. Darstellung gemäß Figur 2) ein Einführen der Rasthaken 26 des Sicherungsbügels 22 in die Ausnehmungen 58 bzw. Schlitzungen 58 einstellt.

Aus der Darstellung gemäß Figur 2B geht hervor, dass die Rippenköpfe 60 der Rippen 44 an ihrer Außenseite die Anschrägung 62 aufweisen. Die Anschrägung 62, die hier als Fase ausgebildet ist, kann auch als Rundung ausgebildet sein und dient der Vereinfachung der Demontage der Rippenköpfe 60 an einem korrespondierend zu deren Geometrie ausgebildeten Hinterschnitt 72 im Injektorstutzen 14 bzw. der Buchse 70.

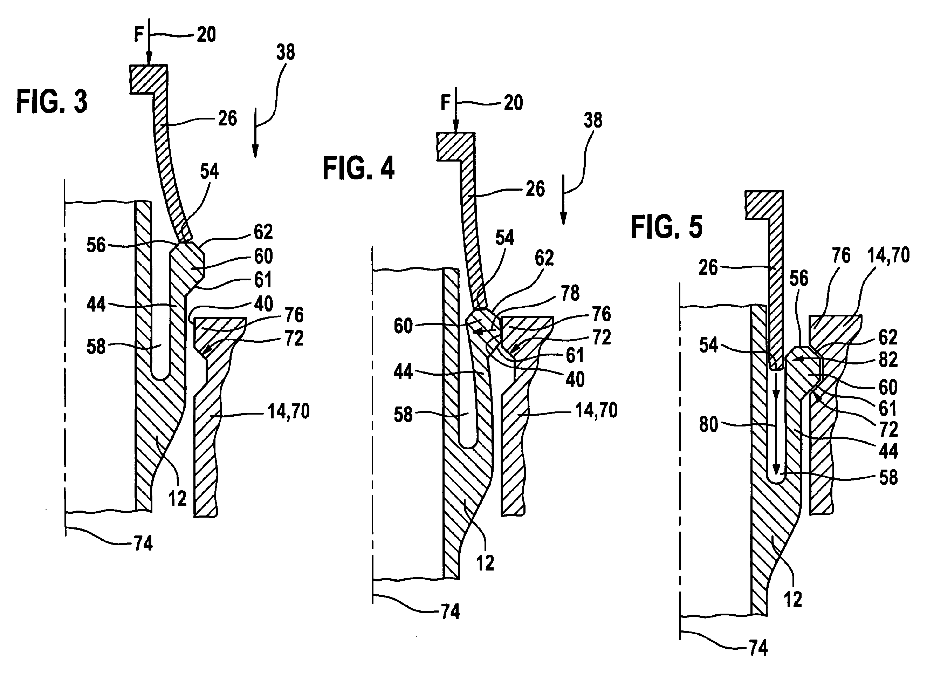

Der Darstellung gemäß Figur 3 ist der Steckerkörper - hier schematisch dargestellt - in einer teilweise in die Öffnung eingeschobenen Position zu entnehmen.

Bei Aufbringung der Montagekraft 20 (vgl. F in der Darstellung gemäß Figur 1) auf den Sicherungsbügel 22 üben die an diesem ausgebildeten, beispielsweise einander gegenüberliegend angeordneten Rasthaken 26 eine Einschubkraft auf die Rippenköpfe 60 der Rippen 44 des Steckerkörpers 12 aus. Dadurch wird der Steckerkörper 12 in die Öffnung 40 des Injektorstutzens 14 bzw. der Buchse 70 eingeschoben. An der Innenseite der Begrenzungswand der Öffnung 40 des Injektorstutzens 14 oder der Buchse 70 befindet sich der Hinterschnitt 72, der korrespondierend zur Außengeometrie der Rippenköpfe 60 der Rippen 44 ausgeführt ist. Oberhalb des Hinterschnitts 72 erstreckt sich am Injektorstutzen 14 bzw. der Buchse 70 ein radial nach innen ragender umlaufender Vorsprung 76. Bezugszeichen 74 bezeichnet die Symmetrieachse des Steckerkörpers 12 des erfindungsgemäß vorgeschlagenen Steckverbinders 10. Aus der Darstellung gemäß Figur 3 geht hervor, dass zwischen der Mantelfläche des Steckerkörpers 12 und der Innenseite der Rippe 44 die im Wesentlichen in vertikale Richtung orientierte Ausnehmung 58 bzw. eine Schlitzung 58 verlaufen, welche der Rippe 44 eine Elastizität in radiale Richtung verleiht.

Figur 4 zeigt, dass beim Einschieben des Steckerkörpers 12 in die Öffnung 40 des Injektorstutzens 14 oder der Buchse 70, d.h. bei aufrechterhaltener Montagekraft 20, eine Auslenkung des Rippenkopfes 60 der Rippe 44 entsprechend des mit Bezugszeichen 78 angedeuteten Pfeils in radialer Richtung nach innen erfolgt. Die Elastizität der Rippe 44 bewirkt, dass bei Kontakt zwischen dem Rippenkopf 60 und dem Vorsprung 76 der Rippenkopf 60 in radialer Richtung nach innen ausgelenkt wird und bei weiterem Einschieben in Richtung auf den an der Innenseite der Buchse 70 bzw. des Injektorstutzens 14 verlaufenden Hinterschnitt 72 einrastet. Dieser Zustand ist in Figur 5 en detail dargestellt. In der Darstellung gemäß Figur 4 rutscht die Außengeometrie des Rippenkopfes 60 bei Aufrechterhaltung der Montagekraft 20 in Montagerichtung 38 entlang des Vorsprungs 76, so lange, bis der Rippenkopf 60 der Rippe 44 aufgrund der der Rippe 44 innewohnenden Elastizität in den Hinterschnitt 72 einschnappt und der Steckerkörper 12 somit in Bezug auf den Injektorstutzen 14 bzw. die Buchse 70 fixiert ist.

Figur 5 zeigt, dass aufgrund der Geometrie der konturierten Stirnseite 54 bzw. 56 (vgl. Darstellungen der Figuren 2A, 2B) der Rasthaken 26 bzw. der Rippen 44 am Steckerkörper 12, die Rasthaken 26 entgegen der Spreizung 64 in radiale Richtung nach innen ausgelenkt werden und entsprechend eines Einschubweges 80 in die Ausnehmungen 58 zwischen der Mantelfläche des Steckerkörpers 12 und die Rippen 44 einfahren. Im in Figur 5 dargestellten Zustand tritt ein Übergriff 82 der konturierten Stirnseiten 54 der Rasthaken 26 durch den Rippenkopf 60 der Rippen 44 auf. Der Übergriff 82 bewirkt zudem, dass bedingt durch die Materialstärke der Rasthaken 26 der Rippenkopf 60 der in radiale Richtung elastisch ausgebildeten Rippe 44, innerhalb des Hinterschnittes 72 der Buchse 70 bzw. des Injektorstutzens 14 fixiert bleibt. Die Rasthaken 26 des Sicherungsbügels 22 können teilweise oder auch vollständig in die Ausnehmungen 58 zwischen der Innenseite der Rippe 44 und der Mantelfläche des Steckerkörpers 12 eintauchen. Tauchen die Rasthaken 26 nur teilweise ein, so kann auch bei Ansammlungen von Schmutz in den Ausnehmungen 58 trotzdem ein sicheres Verrasten des Sicherungsbügels 22 erreicht werden. Dies gilt umso mehr, wenn die Rasthaken 26 vollständig in die Ausnehmungen 58 eingetaucht sind.

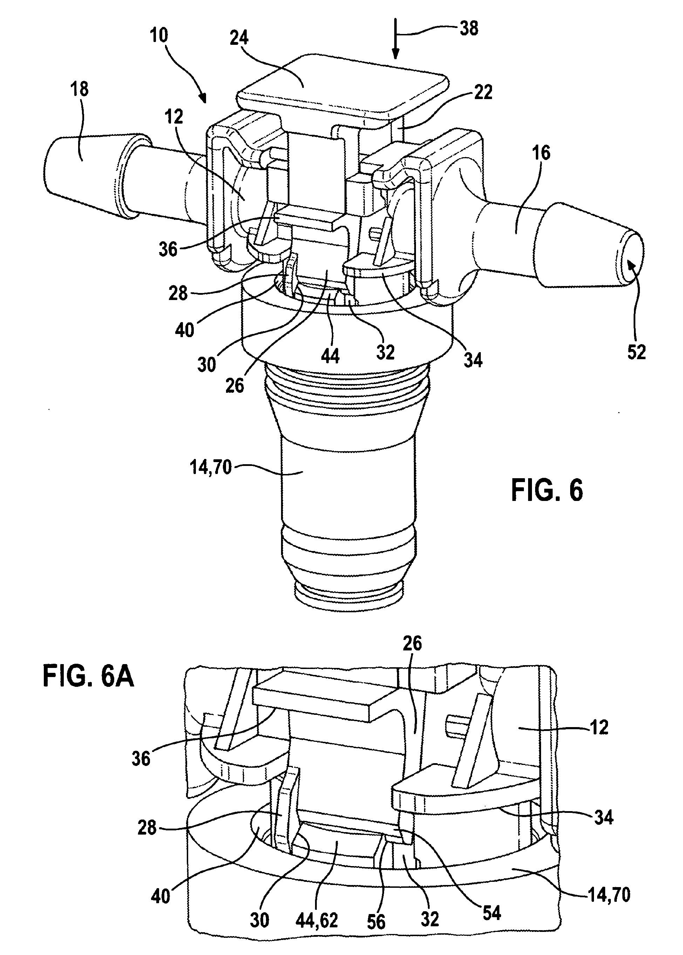

Den Figuren 6 und 6A ist der erfindungsgemäß vorgeschlagene Steckverbinder in dem Zustand zu entnehmen, in dem die mit einer Kontur versehenen Stirnseiten der Rasthaken des Sicherungsbügels die diesen gegenüberliegenden komplementär konturierten Stirnseiten der Rippen des Steckerkörpers gerade kontaktieren.

Figur 6 zeigt, dass bei einer Bewegung des Sicherungsbügels 22 in Montagerichtung 38 durch Aufbringen einer Montagekraft F auf die Stirnseite 24 die Rasthaken 26 mit ihren Stirnseiten an den Stirnseiten der Rippen 44 am Umfang des Steckerkörpers 12 anliegen. Am Steckerkörper 12 sind einander gegenüberliegend - hier in einer 180°-Teilung angeordnet - der erste Anschluss 16 sowie der zweite Anschluss 18 zu erkennen. Diese bilden den sich durch den Steckerkörper 12 erstreckenden Horizontalkanal 52. Die Anschlagfläche, die den maximalen Einschubweg des Sicherungsbügels 22, der verschiebbar am Steckerkörper 12 gelagert ist, begrenzt, ist durch Bezugszeichen 36 bezeichnet. Fest am Steckerkörper 12 ist die weitere Auflagefläche 34 ausgebildet, mit welcher der Steckerkörper 12 im montierten Zustand auf der Umrandung der Öffnung 40 des Injektorstutzens 14 bzw. der Buchse 70 aufliegt. Aus der Darstellung gemäß Figur 6 geht hervor, dass an dem in der Zeichenebene liegenden Rasthaken 26 die zungenförmig ausgebildete Positionierhilfe 28 in den ersten Schlitz 30 neben der Rippe 44 eingefahren ist, während die weitere, zweite schlitzförmig konfigurierte Ausnehmung 32 frei bleibt. Aufgrund der beiden Ausnehmungen 30 bzw. 32, die sich im Wesentlichen in vertikaler Richtung neben der Rippe 44 erstrecken, wirkt die Rippe 44 als Biegebalken.

Figur 6A ist zu entnehmen, dass in dieser vergrößerten Darstellung die konturierte Stirnseite 54 des Rasthakens 26 auf der komplementär zu dieser konturierten Stirnseite 56 der Rippe 44 aufliegt. Aufgrund der gerichteten Kontur, d.h. einer Anschrägung nach innen auf den Steckerkörper 12 hin, wird bei Applikation einer Montagekraft auf den Sicherungsbügel 22 in Montagerichtung 38 erreicht, dass die konturierten Stirnseiten 54 der Rasthaken 26 nach innen abgleiten und in die schlitzförmig konturierten Ausnehmungen 58 einfahren. Deutlich ist der vergrößerten Darstellung gemäß Figur 6A zu entnehmen, dass die zungenförmig ausgebildete Positionierhilfe 28 in die erste schlitzförmige Ausnehmung 30 eingefahren ist. Der vergrößerten Darstellung gemäß Figur 6A ist des Weiteren zu entnehmen, dass die Rippe 44 die Anschrägung 62 aufweist, die im montierten Zustand des Sicherungsbügels 22 dessen Abstützfläche gegen Herausrutschen aus dem Hinterschnitt 72 darstellt.

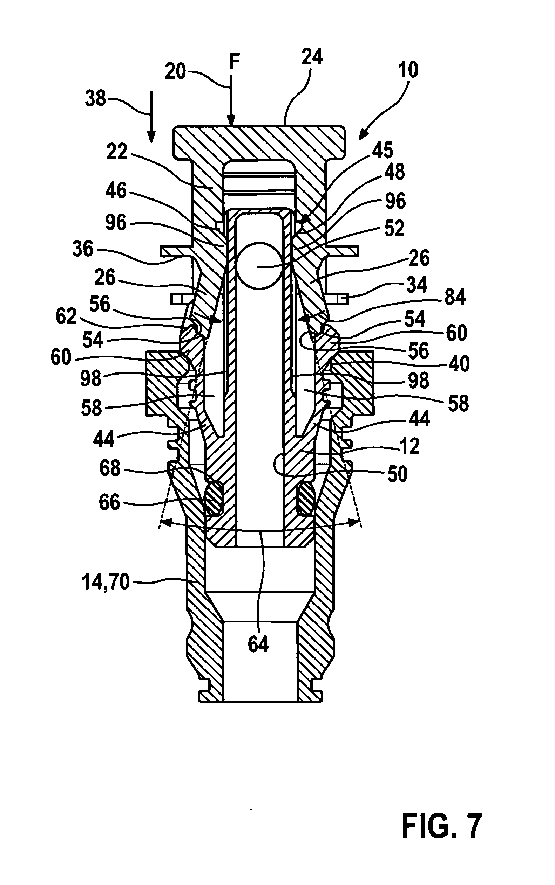

Figur 7 zeigt den verschieblich am Steckerkörper aufgenommenen Sicherungsbügel in seiner Offenstellung.

Aus der Darstellung gemäß Figur 7 geht hervor, dass der Steckerkörper 12 zwar in die Öffnung 40 des Injektorstutzens 14 oder der Buchse 70 zumindest teilweise eingelassen ist, der Sicherungsbügel 22 jedoch noch nicht verrastet ist. In der in Figur 7 dargestellten Offenstellung des Sicherungsbügels 22 ist dieser durch eine Nut-Feder-Anordnung 46, 48, die die Rückhalteeinrichtung 45 bilden, am Steckerkörper 12 in seiner Offenstellung verrastet. In der Offenstellung des Sicherungsbügels 22 berühren die konturierten Stirnseiten 54 der Rasthaken 26 gerade die konturierten Stirnseiten 56 der diesen zugewandten Rippen 44 bzw. der Rippenköpfe 60 der Rippen. Wirkt auf die Stirnfläche 24 des Sicherungsbügels 22 die Montagekraft 20, so kann einerseits der Steckerkörper 12 in die Öffnung 40 eingeschoben werden, bis die Rippenköpfe 60 der Rippen 44 auf der Umrandung der Öffnung 40 im Injektorstutzen 14 bzw. der Buchse 70 aufliegen.

Eine korrekte Führung des Sicherungsbügels 22 am Steckerkörper 12 wird durch die Positionierhilfe 28 erreicht, die im vorstehenden Ausführungsbeispiel zungenförmig ausgebildet ist. Aus der Darstellung gemäß Figur 7 geht hervor, dass in der Offenstellung des Sicherungsbügels 22 am Steckerkörper 12 die beiden Rasthaken 26 die Spreizung 64 aufweisen. Durch die Spreizung 64 wird bewirkt, dass die konturierten Stirnseiten 54 genau an Konturen der komplementär zu diesen konturierten Stirnseiten 56 an der Oberseite der Rippenköpfe 60 der Rippen 44 anliegen und eine durch Bezugszeichen 64 angedeutete Auslenkung der Rasthaken 26 radial nach innen einerseits und der Rippenköpfe 60 andererseits möglich ist.

Der Darstellung gemäß Figur 7 ist zu entnehmen, dass komplementär zur Geometrie der Rasthaken 26 des Sicherungsbügels 22 die Rippen 44 am Steckerkörper 12 einander gegenüberliegend angeordnet sind und zwischen der Innenseite der Rippen 44 und der Mantelfläche des Steckerkörpers 12, die in vertikale Richtung orientierten schlitzförmigen Ausnehmungen 58 vorgesehen sind.

Bezugszeichen 50 bezeichnet den sich durch den Steckerkörper 12 erstreckenden Vertikalkanal, während Bezugszeichen 52 den Horizontalkanal andeutet, der in den ersten Anschluss 16 bzw. den zweiten Anschluss 18 des Steckerkörpers 12 gemäß der Darstellung in Figur 6 übergeht.

In der Offenstellung gemäß Figur 7 ist erkennbar, dass die Auflagefläche 36 des Sicherungsbügels 22 und die Auflagefläche 34 des Steckerkörpers 12 in zwei unterschiedlichen Ebenen liegen. In der in den Figuren 8 und 9 dargestellten Montageposition des erfindungsgemäß vorgeschlagenen Steckverbinders 10 liegen die beiden Auflageflächen 34 und 36 in einer Ebene.

Ausgehend von der Darstellung gemäß Figur 7 erfolgt die Montage des Sicherungsbügels 22 und des Steckerkörpers 12 in die Öffnung 40 des Injektorstutzens 14 oder der Buchse 70. Diese werden gemeinsam in die Öffnung 40 hineingesteckt. Wie aus Figur 7 hervorgeht (vgl. auch Darstellung gemäß der Figuren 3, 4 und 5), liegen die Rasthaken 26 des Sicherungsbügels 22 mit ihren konturierten Stirnseiten 54 auf den Rippenköpfen 60, insbesondere auf den konturierten Stirnseiten 56 der Rippenköpfe 60 auf. Sitzen die Rippenköpfe 60 mit ihren Anschrägungen 62 auf der Planfläche der Umrandung der Öffnung 40 auf, und wird die Montagekraft 20 weiter auf die Stirnfläche 24 des Sicherungsbügels 22 ausgeübt, so erfolgt (vgl. Darstellung gemäß der Figuren 4 und 7) eine Auslenkung der Rasthaken 26 des Sicherungsbügels 22 in Auslenkrichtung 84 nach innen, so dass die konturierten Stirnseiten 54 der Rasthaken 26 in radiale Richtung nach innen von den Rippenköpfen 60 abgleiten. Die konturierten Stirnseiten 54 der Rasthaken 26 gelangen damit in die sich in vertikale Richtung erstreckenden schlitzförmigen Ausnehmungen 58. Die in den Gegenstücken 98 geführten Führungsschienen 96 an der Innenseite der Rasthaken 26 des Sicherungsbügels 22 verhindern zusammen mit der Positionierhilfe 28 ein Verkippen des Sicherungsbügels 22 bei der Montage und beim Schließvorgang desselben. Beim Schließvorgang des Sicherungsbügels 22 werden die Nuten 48 relativ zu den Federn 46 der Rückhalteeinrichtung 45 des Steckerkörpers 12 verfahren, bis der Sicherungsbügel 22 mit seiner Anschlagfläche 36 auf der Umrandung der Öffnung 40 aufliegt.

Die Figuren 8 und 9 zeigen, dass in diesem Zustand die Rasthaken 26 die Rippenköpfe 60 mit ihrer Außenkontur in die Hinterschneidung 72 des Injektorstutzens 14 bzw. der Buchse 70 hineindrängen. Es ergibt sich der Übergriff 82, mit welchem die Innenseite der Rippenköpfe 60 die Spitzen der Rasthaken 26 überdecken, so dass der Steckerkörper 12 in der Montageposition, wie aus den Figuren 8 und 9 hervorgeht, im Injektorstutzen 14 oder der Buchse 70 verliersicher aufgenommen und verrastet ist.

Im Unterschied zur Darstellung gemäß Figur 6 ergibt sich aus den Darstellungen gemäß der Figuren 8 und 9, dass bei vollständiger und korrekter Montage, in der Montageposition 90 des erfindungsgemäß vorgeschlagenen Steckverbinders 10, die Auflagefläche 34 des Steckerkörpers 12 mit der Anschlagfläche 36 des Sicherungsbügels 22 fluchtet. Beide Flächen 34 und 36 liegen auf der Umrandung der Öffnung 40 insbesondere am Injektorstutzen 14 bzw. der Buchse 70 auf. Aus der Darstellung gemäß Figur 8 ergibt sich des Weiteren, dass am Steckerkörper 12 Stege 86 ausgebildet sind, die die Schlauchanlageflächen 88 aufweisen. Die Schläuche z.B. eines Rücklaufsystems einer Kraftstoffeinspritzanlage werden auf die angeschrägten Anschlüsse 16 bzw. 18 aufgeschoben und durch den Konus aufgeweitet und so an den Anschlüssen 16, 18 gesichert. Das axiale Aufschieben der Schläuche erfolgt so lange, bis deren Stirnseite die Schlauchanlageflächen 88 der Stege 86 des Steckerkörpers 12 berühren. Figur 8 zeigt, dass bei korrekt montierten Steckverbinder 10 die Stirnfläche 24 des Sicherungsbügels 22 in einer Ebene mit den Stegen 86 des Steckerkörpers 12 liegt. In der Stirnfläche 24 befindet sich eine Bohrung, und an einem der Stege 86 ein Stift, der in die Bohrung der Stirnfläche 24 eintauchen kann. Auf die zeichnerische Darstellung wurde verzichtet. Dadurch lässt sich eine Detektion der bündigen Lage der Stirnfläche 24 im Vergleich zu den Stegen 86 und somit die korrekte Montageposition des Steckverbinders und des Sicherungsbügels 22 automatisiert oder mechanisch abfragen.

Aus der Darstellung gemäß Figur 9 ist zu entnehmen, dass sich in der Montageposition 90 eine Auflage 94 zwischen der Auflagefläche 36 des Sicherungsbügels 22 und der Umrandung der Öffnung 40 ergibt. Bezugszeichen 92 markiert eine Dichtstelle, in der die verformte Dichtung 66 an der Innenseite der Öffnung 40 im Injektorstutzen 14 bzw. der Buchse 70 anliegt und diese gegen Austritt eines Mediums wie z.B. Kraftstoff abdichtet.

Die Position, in der am Außenumfang des Sicherungsbügels 22 die Auflagefläche 36 angespritzt ist, bestimmt den maximalen Einschubweg, um den die Rasthaken 26 des Sicherungsbügels 22 in die im Wesentlichen schlitzförmig ausgebildeten Ausnehmungen 58 zwischen der Innenseite der Rippen 44 und der Umfangsfläche des Steckerkörpers 12 eingeschoben werden können.

Der erfindungsgemäß vorgeschlagene Steckverbinder 10, der anhand eines Ausführungsbeispiels gemäß der Figuren 1 bis 9 vorstehend beschrieben ist, weist die Montagefunktion auf, wobei der Steckverbinder 10 insbesondere demontierbar gestaltet ist. Durch die Anschrägungen 62 ist eine leichtere Demontage möglich. Die flexibel ausgebildeten Rasthaken 26 sichern den Steckerkörper 12 gegen Lösen aus dem Injektorstutzen 14 bzw. der Buchse 70. Die Abdichtfunktion an der Dichtstelle 92 wird durch den Dichtring 66 übernommen. Der Sicherungsbügel 22 verhindert ein Zurückschnellen der Rippen 44 und erhöht somit die Kraft, die erforderlich ist, um den Steckerkörper 12 aus dem Injektorstutzen 14 oder der Buchse 70 zu entfernen.

In den Figuren 6 und 7 ist der Sicherungsbügel 22 durch die Rückhalteeinrichtung 45 in einer Offenstellung eingerastet, in der dieser die Verbiegung der Rasthaken 26 nicht behindert, diese nicht blockiert. In der Offenstellung wird der Verbund, d.h. der Steckverbinder 10 mit Steckerkörper 12, Sicherungsbügel 22 und Dichtung 66 in der Öffnung 40 des Injektorstutzens 14 oder der Buchse 70 montiert. Die Untergrenze der Montagekraft 20 bestimmt sich aus der für die Verpressung des Dichtringes 66 erforderlichen Druckkraft. Die Obergrenze der Montagekraft 20 bestimmt sich aus der Untergrenze der Lösekraft des Sicherungsbügels 20 auf dem Steckerkörper 12. Der Sicherungsbügel 22 ist verschiebbar am Steckerkörper 12 angeordnet. Bei Aufbringung der Montagekraft 20 werden die Rippen 44 des Steckerkörpers 12 elastisch verformt und rasten in den Hinterschnitt 72 des Injektorstutzens 14 oder der Buchse 70 ein und verriegeln so den Steckerkörper 12 in der Öffnung 40. Dies bedeutet, dass die Montagekraft 20 mindestens so groß sein muss, dass sie die Verformung der Rippen 44 bewirkt. Die als Biegebalken ausgelegten Rasthaken 26 werden durch die Geometrie der Öffnung 40 in den Hinterschnitt 72 zwangseingeführt.

Bei weiterer Wirkung der Montagekraft 20 in Montagerichtung 38 wird der Sicherungsbügel 22 auf dem Steckerkörper 12 so verschoben, dass dieser die Rasthaken 26 des Sicherungsbügels mit den Rippenköpfen 44 übergreift, vgl. Position 82 in Figur 5, so dass die Rippenköpfe 60 durch den Hinterschnitt 72 gesichert sind. Der Sicherungsbügel 22 rastet in der Montageposition 90 derart ein, dass ein kraftfreies Lösen des Sicherungsbügels 22 nicht möglich ist.

Die Montage erfolgt über die in Montagerichtung 38 gerichtete Krafteinleitung 20, wobei sich lediglich der Betrag dieser Kraft über die Montagebewegung hin ändert. Der Steckerkörper 12 mit daran aufgenommenem Sicherungsbügel 22 wird in die Öffnung 40 eingeschoben. Die Kraftübertragung vom Sicherungsbügel 22 auf den Steckerkörper 12 kann sowohl kraft- als auch formschlüssig oder eine Kombination beider Varianten sein. Bei einer kraftschlüssigen Verbindung zwischen dem Steckerkörper 12 und dem Sicherungsbügel 22 werden Störgeometrien, so z.B. vgl. die Rückhalteeinrichtung 45, die sich über die Krafteinleitung elastisch verformen lassen, relativ zueinander bewegt. Die Auslegung der Rückhalteeinrichtung 45 erfolgt unter Berücksichtigung der Reibung; die Montagekraft 20 und die Dichtkraft sind aufeinander abgestimmt.

Bei korrekt montiertem Steckverbinder 10, so z.B. auf einem Kraftstoffinjektor, vgl. die Figuren 8 und 9, und nach Schließen des Sicherungsbügels 22 befindet sich die Stirnfläche 24 des Sicherungsbügels 22 auf gleicher Ebene wie die beiden seitlichen Stege 86, die Schlauchanlageflächen 88 bilden. Diese Position kann durch eine automatisierte oder eine mechanische Abfrage in der Serienfertigung überprüft werden. Ein weiteres optisches Merkmal zur Feststellung der korrekten Montage des erfindungsgemäß vorgeschlagenen Steckverbinders 10 liegt darin, dass die Stege 86 andersfarbig, so z.B. schwarz, gespritzt werden, während der Sicherungsbügel 22 selbst in einer dazu kontrastierenden Farbe gefertigt ist. Sowohl der Steckerkörper 12 als auch der an diesem verschiebbar aufgenommenen Sicherungsbügel 22 werden bevorzugt im Wege des Kunststoffspritzgussverfahrens gefertigt.

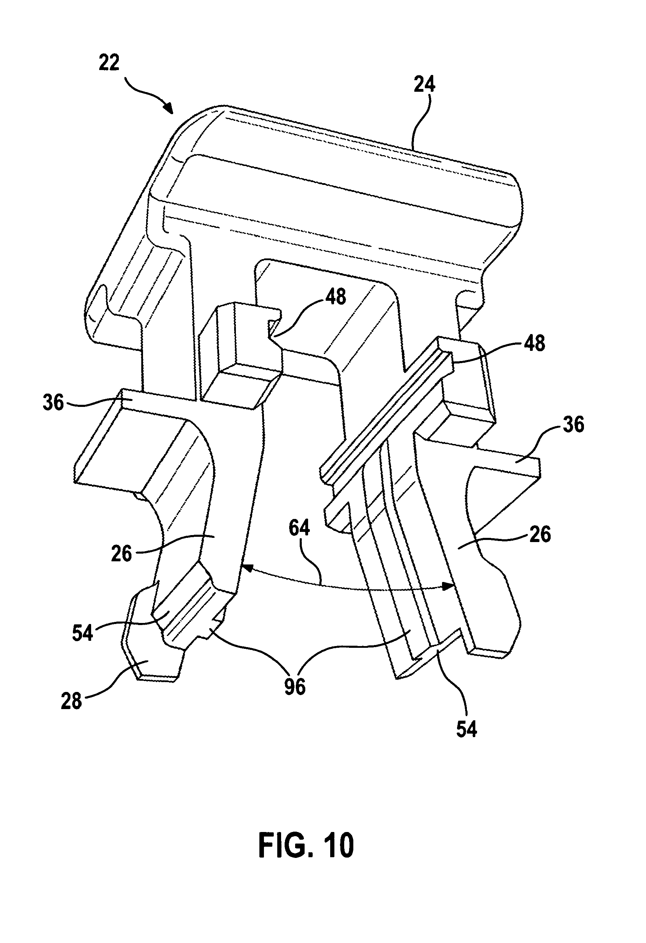

Figur 10 zeigt eine perspektivische Darstellung des Sicherungsbügels.

Aus der Darstellung gemäß Figur 10 geht hervor, dass der Sicherungsbügel 22 unterhalb der Stirnfläche 24 die beiden Rasthaken 26 aufweist. An deren Außenseite befinden sich jeweils die Anschlagflächen 36 des Sicherungsbügels 22. Die Innenseiten der einander gegenüberliegend angeordneten, in der Spreizung 64 relativ zueinander ausgebildeten Rasthaken 26 sind mit der Führungsschiene 96 versehen. Die Führungsschiene 96 kann z.B. als halbzylindrisches oder rechteckförmig oder auch als dreieckförmig konfigurierte Erhebung an den Innenseiten der Rasthaken 26 ausgebildet sein. Die Führungsschienen 96 an der Innenseite der einander gegenüberliegend angeordneten Rasthaken 26 verfahren in komplementär zu der Profilierung der Führungsschiene 96 ausgebildeten Gegenstücken 98 an der Außenseite des Steckerkörpers 12, wie in Zusammenhang mit den Figuren 2, 2a und 7 dargestellt. Durch das Verfahren des Sicherungsbügels 22 entlang der Gegenstücke 98 - die als Nuten ausgebildet sind - werden die Führungsschienen 96 an der Innenseite der Rasthaken 26 bei der Montage bzw. beim Schließvorgang des Sicherungsbügels 22 geführt, um ein Verkippen des Sicherungsbügels 22 während dessen Bewegung relativ zum Steckerkörper 12 zu verhindern. Es besteht selbstverständlich auch die Möglichkeit, die Führungsschienen 96 statt an der Innenseite der Rasthaken 26 auch an der Außenseite des Steckerkörpers 12 anzubringen und die an der Außenseite des Steckerkörpers 12 angeordneten Gegenstücke 98 an der Innenseite der Rasthaken 26 auszubilden. Oberhalb der Führungsschienen 96 erstrecken sich um 90° verdreht zu deren Orientierung, die Nuten 48 zur Sicherung des Sicherungsbügels 22 in der Schließstellung desselben.

Aus der Darstellung gemäß Figur 10 geht des Weiteren hervor, dass an den Enden der Rasthaken 26, d.h. im Bereich der profilierten Stirnflächen 54 an beiden Rasthaken 26, die im Wesentlichen zungenförmig ausgebildeten Positionierhilfen 28 angeordnet sind. Diese sind versetzt zueinander, d.h. an verschiedenen Endseiten der Rasthaken 26 ausgebildet; sie könnten aber auch an einander gegenüberliegenden Enden der Rasthaken 26 ausgeführt sein.

## Patentansprüche

1. Steckverbinder (10) für medienführende Leitungen, mit einem Steckerkörper (12) zum Anschluss an einer Öffnung (40), insbesondere eines Injektorstutzens (14) oder einer Buchse (70) und mindestens einer am Steckerkörper (12) ausgebildeten Rippe (44), die in der Montageposition (90) des Steckerkörpers (12) durch einen am Steckerkörper (12) verstellbaren Sicherungsbügel (22) gesichert ist, **dadurch gekennzeichnet, dass** eine Montagekraft (20) am Sicherungsbügel (22) angreift, der sich auf der mindestens einen Rippe (44) des Steckerkörpers (12) abstützt und den Steckerkörper (12) in die Öffnung (40) bewegt und an einem Hinterschnitt (72) verriegelt.

2. Steckverbinder (10) nach Anspruch 1, **dadurch gekennzeichnet, dass** der Sicherungsbügel (22) Rasthaken (26) aufweist, die einander gegenüberliegend angeordnet sind.

3. Steckverbinder (10) nach Anspruch 2, **dadurch gekennzeichnet, dass** die Rasthaken (26) am Sicherungsbügel (22) in einer Teilung von 180°, oder 120° oder 90° angeordnet sind.

4. Steckverbinder (10) nach Anspruch 2, **dadurch gekennzeichnet, dass** die Rasthaken (26) jeweils eine konturierte Stirnseite (54) aufweisen, die ein radial nach innen gerichtetes Abgleiten (84) von der mindestens einen Rippe (44) des Steckverbinders (12) bewirken.

5. Steckverbinder (10) gemäß Anspruch 2, **dadurch gekennzeichnet, dass** an zumindest einem Rasthaken (26) eine Positionierhilfe (28) ausgeführt ist.

6. Steckverbinder (10) gemäß Anspruch 5, **dadurch gekennzeichnet, dass** die Positionierhilfe (28) zungenförmig ausgeführt ist und in eine schlitzförmige Ausnehmung (30) des Steckerkörpers (12) eintaucht.

7. Steckverbinder (10) gemäß Anspruch 1, **dadurch gekennzeichnet, dass** die mindestens eine Rippe (44) am Umfang des Steckerkörpers (12) als Biegebalken ausgeführt ist und einen Rippenkopf (60) aufweist, dessen Außenkontur komplementär zur Kontur des Hinterschnitts (72) ausgeführt ist.

8. Steckverbinder (10) gemäß Anspruch 7, **dadurch gekennzeichnet, dass** am Rippenkopf (60) der mindestens einen Rippe (44) eine konturierte Stirnseite (56) ausgeführt ist, deren Konturierung komplementär zur Kontur der Stirnseite (54) der Rasthaken (26) ausgeführt ist, und die ein radial nach innen gerichtetes Abgleiten der Rasthaken (26) bewirkt.

9. Steckverbinder (10) gemäß Anspruch 1, **dadurch gekennzeichnet, dass** zwischen der mindestens einen Rippe (44) und dem Umfang des Steckerkörpers (12) eine in vertikale Richtung verlaufende Ausnehmung (58) ausgeführt ist.

10. Steckverbinder (10) gemäß der vorhergehenden Ansprüche, **dadurch gekennzeichnet, dass** in verriegeltem Zustand (90) des Steckerkörpers (12) die Rasthaken (26) in die Ausnehmungen (58) zumindest teilweise hineinragen und die Rippenköpfe (60) der Rippen (44), die die Rasthaken (26) übergreifen (82), in den Hinterschnitt (72) hineindrängen.

11. Steckverbinder (10) gemäß Anspruch 1, **dadurch gekennzeichnet, dass** der Sicherungsbügel (22) in seiner Offenstellung durch eine Rückhalteeinrichtung (45) am Steckerkörper (12) gehalten ist.

12. Steckverbinder (10) gemäß Anspruch 2, **dadurch gekennzeichnet, dass** der Sicherungsbügel (22) insbesondere zwei Rasthaken (26) aufweist, die mit einer Spreizung (64) in Bezug zueinander verlaufen.

13. Steckverbinder (10) gemäß Anspruch 1, **dadurch gekennzeichnet, dass** der Sicherungsbügel (22) eine Auflagefläche (36) umfasst, mit welcher dieser im verriegelten Zustand (90) des Steckerkörpers (12) in der Öffnung (40) auf deren Umrandung aufliegt (94).

14. Steckverbinder (10) gemäß Anspruch 1, **dadurch gekennzeichnet, dass** sich am Steckerkörper (12) beidseits der mindestens einen Rippe (44) in vertikale Richtung verlaufende, schlitzförmige Ausnehmungen (30, 32) erstrecken.

15. Steckverbinder (10) gemäß Anspruch 1, **dadurch gekennzeichnet, dass** der Steckerkörper (12) eine Auflagefläche (34) umfasst, die im verriegelten Zustand des Steckerkörpers (12) - mit der Auflagefläche (36) des Sicherungsbügels (22) im verriegelten Zustand fluchtend - auf der Umrandung der Öffnung (40) aufliegt.

16. Steckverbinder (10) gemäß Anspruch 13, **dadurch gekennzeichnet, dass** die Auflagefläche (36) am Umfang des Sicherungsbügels (22) angebracht ist und den Einschubweg (80) der Rasthaken (26) in die Ausnehmungen (58) zwischen dem Steckerkörper (12) und den Rippen (44) begrenzt.

17. Verfahren zur Montage eines Steckverbinders (10) gemäß einem oder mehrerer der vorhergehenden Ansprüche mit nachfolgenden Verfahrensschritten:
a) dem Einstecken des Steckerkörpers (12) mit dem verstellbar aufgenommenen, in einer Offenstellung befindlichen Sicherungsbügel (22),
b) dem Einschieben von Rippen (44, 60) in die Öffnung (40) bis die Rippen (44, 60) an einem Hinterschnitt (72) verrasten,
c) dem Verstellen von in einer Spreizung (64) angeordneten Rasthaken des Sicherungsbügels (22) in Ausnehmungen (58) und
d) dem Erzeugen eines Übergriffs (82) zwischen Rippen (44, 60) und von Rasthaken (26) des Sicherungsbügels (22) zur Sicherung der Rippen (44, 60) in einer Montageposition (90).

## Claims

1. Plug connector (10) for media-carrying lines, having a plug body (12) for connection to an opening (40), in particular in an injector nozzle (14) or a bushing (70), and at least one rib (44) which is formed on the plug body (12) and is secured by a securing clip (22), which can be adjusted on the plug body (12), in the mounting position (90) of the plug body (12), **characterized in that** a mounting force (20) acts on the securing clip (22) which is supported on the at least one rib (44) of the plug body (12) and moves the plug body (12) into the opening (40) and locks the said plug body in an undercut (72).

2. Plug connector (10) according to Claim 1, **characterized in that** the securing clip (22) has latching hooks (26) which are arranged opposite one another.

3. Plug connector (10) according to Claim 2, **characterized in that** the latching hooks (26) are arranged on the securing clip (22) with a separation of 180° or 120° or 90°.

4. Plug connector (10) according to Claim 2, **characterized in that** the latching hooks (26) each have a contoured end face (54) which causes the at least one rib (44) of the plug body (12) to slide off (84) in a radially inwardly directed manner.

5. Plug connector (10) according to Claim 2, **characterized in that** a positioning aid (28) is formed on at least one latching hook (26).

6. Plug connector (10) according to Claim 5, **characterized in that** the positioning aid (28) is of tongue-like design and enters a slot-like recess (30) in the plug body (12).

7. Plug connector (10) according to Claim 1, **characterized in that** the at least one rib (44) is formed on the circumference of the plug body (12) as a bending bar and has a rib head (60), the outer contour of which is designed to complement the contour of the undercut (72).

8. Plug connector (10) according to Claim 7, **characterized in that** a contoured end face (56) is formed on the rib head (60) of the at least one rib (44), the contouring of the said contoured end face being designed to complement the contour of the end face (54) of the latching hooks (26) and causing the latching hooks (26) to slide off in a radially inwardly directed manner.

9. Plug connector (10) according to Claim 1, **characterized in that** a recess (58) which runs in the vertical direction is formed between the at least one rib (44) and the circumference of the plug body (12).

10. Plug connector (10) according to the preceding claims, **characterized in that**, in the locked state (90) of the plug body (12), the latching hooks (26) at least partially project into the recesses (58) and push the rib heads (60) of the ribs (44), which engage over (82) the latching hooks (26), into the undercut (72).

11. Plug connector (10) according to Claim 1, **characterized in that** the securing clip (22) is held on the plug body (12) by a retaining device (45) in its open position.

12. Plug connector (10) according to Claim 2, **characterized in that** the securing clip (22) has, in particular, two latching hooks (26) which run relative to one another with a spread (64).

13. Plug connector (10) according to Claim 1, **characterized in that** the securing clip (22) comprises a bearing surface (36) by way of which the said securing clip rests (94) in the opening (40) on the border of the plug body (12) in the locked state (90) of the said plug body.

14. Plug connector (10) according to Claim 1, **characterized in that** slot-like recesses (30, 32) which run in the vertical direction extend on the plug body (12) on both sides of the at least one rib (44).

15. Plug connector (10) according to Claim 1, **characterized in that** the plug body (12) comprises a bearing surface (34) which rests on the border of the opening (40) in the locked state of the plug body (12) - in alignment with the bearing surface (36) of the securing clip (22) in the locked state.

16. Plug connector (10) according to Claim 13, **characterized in that** the bearing surface (36) is fitted on the circumference of the securing clip (22) and delimits the insertion path (80) of the latching hooks (26) into the recesses (58) between the plug body (12) and the ribs (44).

17. Method for assembling a plug connector (10) according to one or more of the preceding claims, comprising the following method steps:
a) plug-connecting the plug body (12) to the securing clip (22) which is accommodated in an adjustable manner and is in an open position,
b) pushing ribs (44, 60) into the opening (40) until the ribs (44, 60) latch with an undercut (72),
c) adjusting latching hooks, which are arranged with a spread (64), of the securing clip (22) in recesses (58), and
d) generating an overlap (82) between ribs (44, 60) and latching hooks (26) of the securing clip (22) for securing the ribs (44, 60) in a mounting position (90).

## Revendications

1. Raccord à emboîtement (10) pour conduites conduisant des fluides, comprenant un corps d'emboîtement (12) pour le raccordement à une ouverture (40), en particulier d'une tubulure d'injecteur (14) ou d'une douille (70) et au moins une ailette (44) réalisée sur le corps d'emboîtement (12), laquelle ailette est fixée dans la position de montage (90) du corps d'emboîtement (12) par un étrier de fixation (22) déplaçable sur le corps d'emboîtement (12), **caractérisé en ce qu'**une force de montage (20) s'exerce sur l'étrier de fixation (22) qui s'appuie sur l'au moins une ailette (44) du corps d'emboîtement (12) et qui déplace le corps d'emboîtement (12) dans l'ouverture (40) et le verrouille sur une contre-dépouille (72).

2. Raccord à emboîtement (10) selon la revendication 1, **caractérisé en ce que** l'étrier de fixation (22) présente des crochets d'encliquetage (26) qui sont disposés en regard les uns des autres.

3. Raccord à emboîtement (10) selon la revendication 2, **caractérisé en ce que** les crochets d'encliquetage (26) sont disposés sur l'étrier de fixation (22) à intervalles de 180°, ou de 120°, ou de 90°.

4. Raccord à emboîtement (10) selon la revendication 2, **caractérisé en ce que** les crochets d'encliquetage (26) présentent chacun un côté frontal profilé (54), lesdits côtés frontaux provoquant un glissement (84) orienté radialement vers l'intérieur de l'au moins une ailette (44) du corps à emboîtement (12).

5. Raccord à emboîtement (10) selon la revendication 2, **caractérisé en ce qu'**un auxiliaire de positionnement (28) est réalisé sur au moins un crochet d'encliquetage (26).

6. Raccord à emboîtement (10) selon la revendication 5, **caractérisé en ce que** l'auxiliaire de positionnement (28) est réalisé en forme de langue et plonge dans un évidement (30) en forme de fente du corps d'emboîtement (12).

7. Raccord à emboîtement (10) selon la revendication 1, **caractérisé en ce que** l'au moins une ailette (44) est réalisée au niveau de la périphérie du corps d'emboîtement (12) sous forme de poutre flexible et présente une tête d'ailette (60) dont le contour extérieur est réalisé de manière complémentaire au contour de la contre-dépouille (72) .

8. Raccord à emboîtement (10) selon la revendication 7, **caractérisé en ce qu'**un côté frontal (56) profilé est réalisé au niveau de la tête d'ailette (60) de l'au moins une ailette (44), dont le profilage est réalisé de manière complémentaire au profilé du côté frontal (54) des crochets d'encliquetage (26), et qui provoque un glissement orienté radialement vers l'intérieur des crochets d'encliquetage (26).

9. Raccord à emboîtement (10) selon la revendication 1, **caractérisé en ce qu'**un évidement (58) s'étendant dans la direction verticale est réalisé entre l'au moins une ailette (44) et la périphérie du corps d'emboîtement (12).

10. Raccord à emboîtement (10) selon l'une quelconque des revendications précédentes, **caractérisé en ce que** dans l'état verrouillé (90) du corps d'emboîtement (12), les crochets d'encliquetage (26) pénètrent au moins en partie dans les évidements (58) et les têtes d'ailette (60) des ailettes (44), qui viennent en prise (82) pardessus les crochets d'encliquetage (26), pénètrent dans la contre-dépouille (72).

11. Raccord à emboîtement (10) selon la revendication 1, **caractérisé en ce que** l'étrier de fixation (22) est maintenu dans sa position d'ouverture par un dispositif de retenue (45) sur le corps d'emboîtement (12).

12. Raccord à emboîtement (10) selon la revendication 2, **caractérisé en ce que** l'étrier de fixation (22) présente au moins deux crochets d'encliquetage (26) qui s'étendent l'un par rapport à l'autre avec un écartement (64).

13. Raccord à emboîtement (10) selon la revendication 1, **caractérisé en ce que** l'étrier de fixation (22) comprend une surface d'appui (36) avec laquelle celui-ci repose dans l'état verrouillé (90) du corps d'emboîtement (12) dans l'ouverture (40) sur sa bordure périphérique (94).

14. Raccord à emboîtement (10) selon la revendication 1, **caractérisé en ce que** des évidements en forme de fente (30, 32) s'étendant dans la direction verticale de part et d'autre de l'au moins une ailette (44), s'étendent sur le corps d'emboîtement (12).

15. Raccord à emboîtement (10) selon la revendication 1, **caractérisé en ce que** le corps d'emboîtement (12) comprend une surface d'appui (34), qui, dans l'état verrouillé du corps d'emboîtement (12), repose sur la bordure périphérique de l'ouverture (40) - en affleurement avec la surface d'appui (36) de l'étrier de fixation (22) dans l'état verrouillé.

16. Raccord à emboîtement (10) selon la revendication 13, **caractérisé en ce que** la surface d'appui (36) est réalisée sur la périphérie de l'étrier de fixation (22) et limite la distance d'enfoncement (80) des crochets d'encliquetage (26) dans les évidements (58) entre le corps d'emboîtement (12) et les ailettes (44).

17. Procédé de montage d'un raccord à emboîtement (10) selon l'une quelconque ou plusieurs des revendications précédentes, comprenant les étapes de procédé suivantes :
a) emboîtement du corps d'emboîtement (12) avec l'étrier de fixation (22) reçu de manière déplaçable, se trouvant dans une position d'ouverture,
b) insertion d'ailettes (44, 60) dans l'ouverture (40) jusqu'à ce que les ailettes (44, 60) s'encliquètent sur une contre-dépouille (72),
c) déplacement dans des évidements (58) de crochets d'encliquetage de l'étrier de fixation (22) disposés suivant un écartement (64) et
d) production d'un engagement par le dessus (82) entre les ailettes (44, 60) et les crochets d'encliquetage (26) de l'étrier de fixation (22) pour fixer les ailettes (44, 60) dans une position de montage (90).
